# EUROPEAN PATENT APPLICATION

(11) **EP 3 249 138 A1**
(43) Date of publication of application: **29.11.2017**
(21) Application number: 16739821.3
(22) Date of filing: 15.01.2016
(51) Int. Cl.: E04H 12/12, E04H 12/20

(54) **CONCRETE TOWER**

(30) Priority: 22.01.2015 ES 201530080
(71) Applicant: Ingecid, Investigación Y Desarrollo de Proyectos S.L., 39012 Boo de Piélagos (Cantabria) (ES)
(72) Inventor: BALLESTER MUÑOZ, Francisco, 39005 Santander (ES); RICO ARENAL, Jokin, 39005 Santander (ES)
(86) International application number: PCT/ES2016/070015
(87) International publication number: WO 2016/116645

(57) **Abstract**

The concrete tower comprises: a shaft (1) and a foundation (2). The shaft (1) is formed by two distinct segments: - an upper segment (11) comprised between an intermediate section (13) and an upper section (14) of the shaft (1); said upper segment (11) having post-tensioning interior tendons (3), tensioned between the intermediate section (13) and the upper section (14); and - a concrete lower segment (12) comprised between the intermediate section (13) and a foundation (2); said lower segment (12) having post-tensioning and bracing exterior tendons (4), diverging towards the lower area, and which are attached by opposite ends to the intermediate section (13) of the shaft (1) and the foundation (2) of said lower segment. The foundation (2) comprises a concrete ring (21) having radial ribs (22) of variable edge.

## Description

### Object of the invention.

The object of the present invention is a concrete tower comprising a shaft and a foundation, with the particularity that the shaft comprises an upper segment with post-tensioning interior tendons and a lower segment which has post-tensioning and bracing exterior tendons of the tower, attached to an intermediate section of the shaft and to the foundation of the tower.

### Technical field of the invention.

This dual function post-tensioning system is applicable in concrete towers intended primarily, but not limited to, the installation of wind turbines.

### State of the art.

Antennas of great height formed by slender metal structures that have anchorage at different heights through tendons like "guys" are known. These tendons have an essential bracing function, since in such slender structures an excessive increase of the compression is not advisable due to the risk of buckling. This is the reason why the angle of the tendons is relatively high with respect to the vertical.

Cable-stayed bridges are also known, wherein the tendons do not have as an essential function the bracing of the stack, their function is to accumulate the loads of the boards that make up the bridge and transmit them to the towers compressing them for taking the loads to the ground.

Mini-turbines, slender turbines of small dimensions, use tendons or tensors as bracing for the tower. As in the case of communication antennas, the tensions are not very high and the angles with respect to the vertical are relatively large to avoid the risk of buckling.

Some metallic wind turbines of medium size have support tendons in the shaft of the tower. The tendons' function is that of bracing at some point of the tower to minimize stresses therein. The inclination of the tendons with respect to the vertical is very high not so much to not excessively compress the metal sections but rather to maximize the bracing function thereof.

With regard to concrete towers it is worth mentioning that, at present, there is no technique as such for the guying of concrete wind towers. The option used for bracing is to arrange buttresses which stiffen the tower, this being a technique incorporated from construction.

To achieve this compression in the concrete towers, for the solutions of prefabricated concrete, an embedded internal prestressing is normally used and, for the solutions of concrete "in situ", it is carried out with an interior extradosed with an almost zero inclination with respect to the vertical.

In these two cases, the prestressed concrete has no bracing function, its only function being to pre-compress the tower to prevent or reduce the traction tensions on the structure.

### Description of the invention.

The tower of the invention, comprising a shaft and a foundation, presents the particularity of incorporating a solution designed so that the structural optimisation entails constructive and logistical simplicity, which facilitates reducing costs and allows the "in situ" construction of higher post-tensioned concrete towers and consequently, with greater capacity for the utilisation of the wind resource.

The tower of the invention comprises a shaft with two distinct segments: an upper segment of a constant or variable section of concrete or other material, and a lower concrete segment built "in situ", which is connected to a ribbed foundation, and which has a post-tensioning system consisting of extradosed tendons, which are located and anchored from the top of said lower segment of the shaft to the ribbed foundation, so that the foundation has the dual function of supporting the loads from the tower and serving as anchorage for the post-tensioning tendons.

The post-tensioning system, formed by the tendons anchored at the top of the lower segment of the shaft and at the foundation, also has a dual function: on the one hand it serves to brace the tower at a certain height, so that the movements and stresses of the tower are less, and on the other hand to compress the tower in all of its lower segment, so that all sections of the lower segment of the tower shaft are subjected to an axial stress limiting the opening of cracks in the concrete.

This last point is important, since certification requirements dictate that the concrete elements are compressed under determined load thresholds. Once this load threshold is exceeded, the reinforced concrete sections would begin to work under traction, the passive reinforcements of the post-tensioning, i.e. the tendons being responsible for withstanding the stresses arising from such loads in the traction areas and avoiding the cracking of the concrete.

According to the invention, the upper segment of the shaft may have post-tensioning interior tendons extending therealong.

The lower segment of the concrete shaft, once built "in situ" will be subjected to compressive stresses produced by the external tendons anchored to the concrete on the one hand to the top of said lower segment and on the other hand to the foundation and tensioned before the start of operation of the tower.

The interior post-tensioning tendons which are located in the upper segment, if the stresses to be supported require so, can be extended in this lower segment also in its interior up to the foundation, complementing this interior post-tensioning of the tower.

The ribbed foundation consists of a concrete ring provided with radial ribs of variable edge, to which radial ribs the respective bracing and post-tensioning exterior tendons of the tower are attached and anchored. These radial ribs, if necessary, can be post-tensioned in the radial direction, to absorb the tractions through bending which the exterior tendons of the tower exert on said radial ribs.

Structurally, the assembly formed by the exterior post-tensioning and the foundation system constitutes an innovative assembly with respect to other "in situ" concrete towers.

On the one hand, the interior tendons of the upper segment of the shaft interconnect in the reinforced intermediate section with the exterior tendons of the lower segment of the shaft and are opened towards the lower area being attached to the nerves of the foundation, said divergent exterior tendons performing a dual function: post-tensioning and bracing the tower.

On the other hand, the foundation, from which the ribs start that provide stability to the tower, acts as support for the post-tensioning and bracing exterior tendons, avoiding the need to use elements external to the tower, such as large concrete blocks for anchoring the aforementioned exterior tendons.

The ribs of the foundation may have means for totally or partially balancing the load of the exterior tendons that may consist of a pile or micropile, for example metallic or of reinforced concrete, or in tendons directed to the ground from the end of the ribs.

The change of direction with the vertical of the exterior tendons, in relation to the interior tendons, causes a horizontal component necessary to achieve the bracing of the tower, but it also produces an effective loss of compressive tension in the lower area of the tower. For this reason, the exterior tendons must meet certain mechanical and geometrical characteristics such that the compressive load is sufficient, considering that the stresses in the lower area have been reduced due to the bracing of the tower.

These compressive loads caused by the tendons in the tower, together with the tower's own weight, allow that no section of the tower is decompressed in the near-permanent load state.

The proposed solution is a similar concept to a conventional post-tensioning that goes through the tower, and half the tower's height is opened towards the lower area for, in addition to compressing, horizontally bracing the tower.

The connection between the exterior tendons of the lower segment and the interior tendons of the upper segment is made with the reinforced intermediate section of the shaft which is constituted by an increase in thickness of the shaft. This reinforced intermediate section may need circumferential post-tensioning elements.

With the features described above, the invention provides a number of advantages, among which are mentioned:
- The post-tensioning by means of exterior tendons which in addition brace the tower allows considerably reducing the stresses on the tower.
- The reduction in stresses allows arriving at a relatively small solution of constant diameter, since the bracing and the tower base section have similar stresses, optimising the solution from the structural viewpoint.
- The solution of constant diameter very significantly simplifies the construction phase in terms relating to logistics, deadlines, etc., with a corresponding significant reduction in costs.
- The solution of foundation mixed between annular and rib foundation optimizes the material arrangement increasing the stability against horizontal loads.
- The anchorage of the exterior tendons to the foundation itself, from the radial ribs, eliminates arranging large concrete blocks (or similar) to absorb the traction reactions of the tower caused by horizontal stresses on the top part.

### Description of the figures.

In order to complement the description that is being carried out and with the purpose of facilitating the understanding of the characteristics of the invention, the present description is accompanied by a set of drawings wherein, by way of a nonlimiting example, the following has been represented:
- Figure 1 shows a perspective view of an exemplary embodiment of the concrete tower of the invention.
- Figure 2 shows a schematic perspective view of an exemplary embodiment of the concrete tower according to the invention in a position of use supporting a wind turbine.
- Figure 3 corresponds to a top plan view of the tower of Figure 2 supporting a wind turbine.
- Figure 4 shows an elevational view of the concrete tower according to the invention sectioned along a vertical plane, and in which the interior tendons of the upper segment of the shaft and the exterior tendons of the lower segment thereof can be seen.
- Figure 5 shows a perspective detail of an upper part of the tower sectioned along a vertical plane, in which the attachment of the interior tendons and the exterior tendons to the shaft of the concrete tower can be seen.
- Figure 6 shows a perspective detail of a lower part of the concrete tower, in which the foundation and the attachment of the exterior tendons to said foundation can be seen.
- Figure 7 shows a perspective view of a lower part of the tower, in which the ribs of the foundation comprise tendons for anchorage to the ground.
- Figure 8 shows a perspective view of the lower part of the tower, sectioned along a vertical plane, in which the ribs of the foundation interiorly comprise post-tensioning tendons.

### Preferred embodiment of the invention.

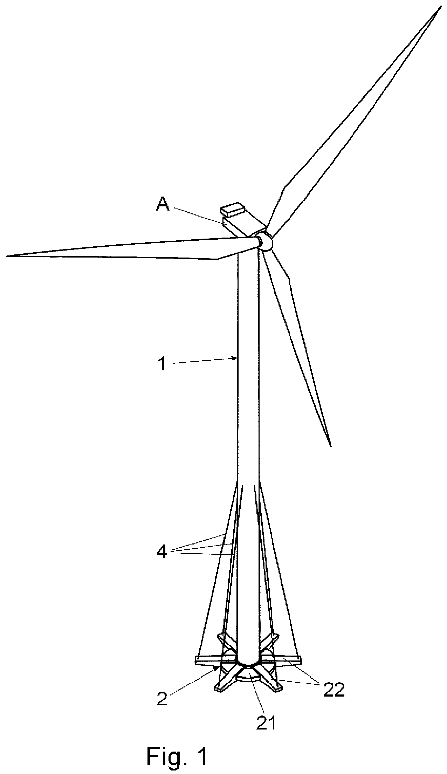

In Figure 1, an exemplary embodiment of the concrete tower according to the invention, comprising: a shaft (1) formed by a hollow concrete cylinder post-tensioned "in situ", of constant exterior diameter and a foundation (2) for attachment to the ground can be seen.

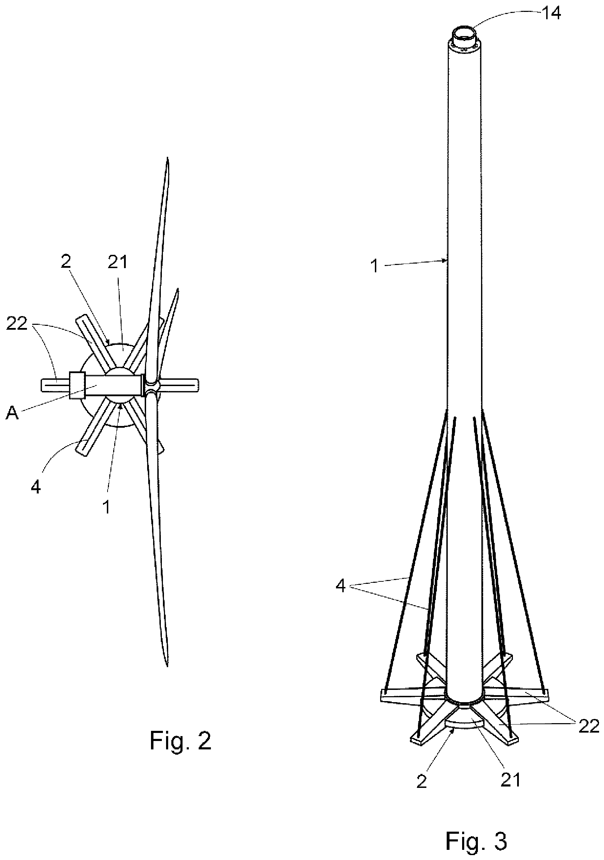

In Figures 2 and 3, the concrete tower of Figure 1 in its use position supporting a wind turbine (A) mounted on the tower in question can be seen.

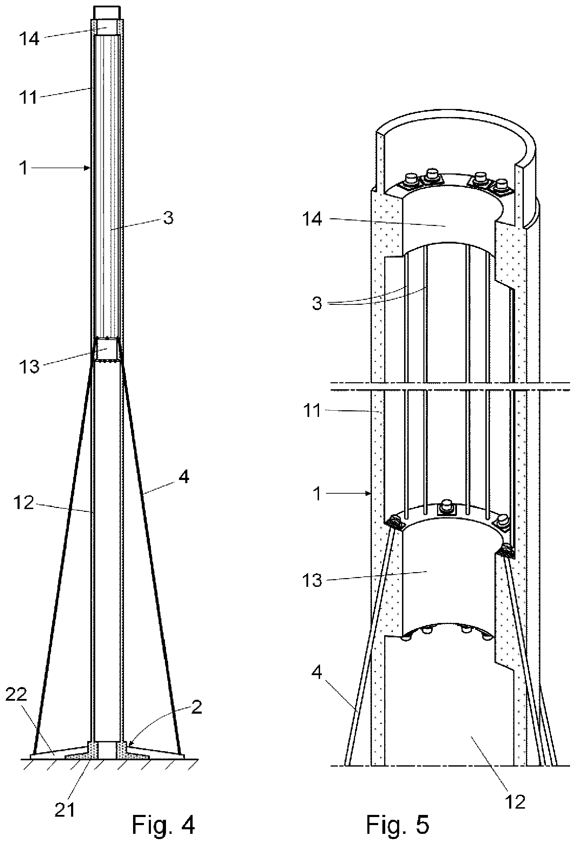

As can be seen in Figure 4, the shaft (1) comprises an upper segment (11) comprised between one reinforced intermediate section (13) and an also reinforced upper section (14), formed by an increased thickness of the concrete shaft (1); and a lower segment (12) comprised between the intermediate section (13) and a foundation (2) arranged at its lower end.

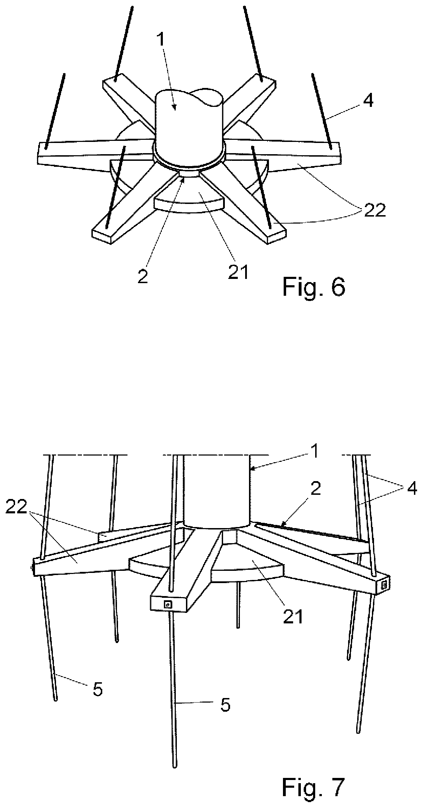

In Figures 5 and 6, the upper segment (11) has post-tensioned interior tendons (3) vertically oriented and arranged with a circular distribution inside said upper segment (11), said interior tendons being tensioned between a reinforced intermediate section (13) and an also reinforced upper section (14), formed by an increased thickness of the concrete shaft (1), as can be seen more clearly in Figure 4.

The aforementioned interior tendons (3) establish the post-tensioning of the forming concrete of the upper segment (11) of the shaft (1) of the tower.

The lower segment (12) of the shaft is provided with post-tensioning and bracing exterior tendons (4) of the tower, attached by their ends to the reinforced intermediate section (13) of the shaft and to the foundation (2), specifically to the end of radial ribs (22) which start from a concrete ring (21) and which together with said concrete ring constitute the foundation (2).

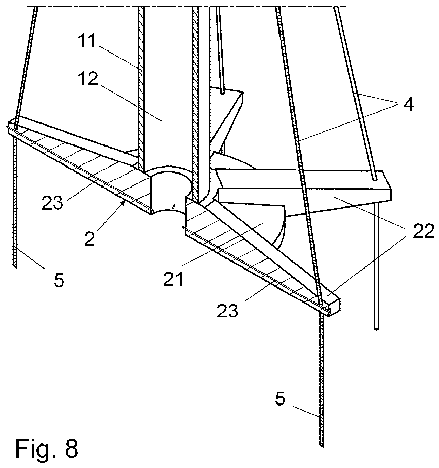

In the embodiment shown in Figures 7 and 8, the radial ribs (22) of the foundation (2) incorporate post-tensioning tendons (23) oriented in the radial direction to absorb the tractions exerted by the exterior tendons (4) of the tower in said radial ribs (22).

In the section shown in Figure 8, the radial ribs (22) of the foundation (2) have on their end tendons (5) for anchorage to the ground.

Once the nature of the invention as well as an example of preferred embodiment have been sufficiently described, it is stated for all pertinent purposes that the materials, form, size and arrangement of the elements described are susceptible to changes, provided these do not involve an alteration of the essential characteristics of the invention that are claimed subsequently.

## Claims

1. A concrete tower; comprising a shaft (1) and a foundation (2). **characterised in that**:
- the shaft (1) is formed by two distinct segments: - an upper segment (11) comprised between an intermediate section (13) and an upper section (14) of the shaft (1); said upper segment (11) having post-tensioning interior tendons (3), tensioned between the intermediate section (13) and the upper section (14); and - a concrete lower segment (12) comprised between the intermediate section (13) and a foundation (2); said lower segment (12) having post-tensioning and bracing exterior tendons (4), diverging towards the lower area, and which are attached by opposite ends to the intermediate section (13) of the shaft (1) and the foundation (2) of said lower segment and;
- the foundation (2) comprises a concrete ring (21) having radial ribs (22) of variable edge.

2. The concrete tower; according to claim 1, **characterised in that** the post-tensioning and bracing exterior tendons (4) of the lower segment (12) of the shaft (1), which start from the intermediate section (13) of the shaft (1), are attached to respective radial ribs (22) of the foundation (2).

3. The concrete tower; according to claim 1, **characterised in that** the foundation (2) is composed of a concrete ring (21) having radial ribs (22) of variable edge, to which radial ribs (22) the respective post-tensioning and bracing exterior tendons (4) are attached, so that the foundation performs the dual function of load transmission to the ground and anchorage of the exterior tendons.

4. The concrete tower; according to claim 1, **characterised in that** the radial ribs (22) of the foundation (2) at their ends are provided with means for anchorage to the ground constituted by tendons (5), or by a pile or by a metallic or reinforced concrete micropile.
